# EUROPÄISCHE PATENTSCHRIFT

(11) **EP 3 948 124 B1**
(45) Veröffentlichungstag und Bekanntmachung des Hinweises auf die Patenterteilung: **02.11.2022**
(21) Anmeldenummer: 20716700.8
(22) Anmeldetag: 27.03.2020
(51) Int. Cl.: F25J 3/04, F25J 5/00, F25J 1/00, F25J 1/02, F28F 27/02, F28D 20/00

(54) **VERFAHREN ZUM BETREIBEN EINES WÄRMETAUSCHERS, ANORDNUNG MIT WÄRMETAUSCHER UND ANLAGE MIT ENTSPRECHENDER ANORDNUNG**
METHOD FOR OPERATING A HEAT EXCHANGER, ASSEMBLY WITH HEAT EXCHANGER AND SYSTEM WITH CORRESPONDING ASSEMBLY
PROCÉDÉ DE FONCTIONNEMENT D'UN ÉCHANGEUR DE CHALEUR, DISPOSITIF DOTÉ D'UN ÉCHANGEUR DE CHALEUR ET INSTALLATION DOTÉE DU DISPOSITIF CORRESPONDANT

(30) Priorität: 05.04.2019 EP 19020257
(43) Veröffentlichungstag der Anmeldung: 09.02.2022
(73) Patentinhaber: Linde GmbH, 82049 Pullach (DE)
(72) Erfinder: LOCHNER, Stefan, 85567 Grafing (DE); SPÖRI, Ralph, 82544 Egling (DE); HÖLZL, Reinhold, 82538 Geretsried (DE); LEHMACHER, Axel, 82544 Egling-Moosham (DE); WOITALKA, Alexander, 81369 München (DE); SCHAUDER, Sven, 82049 Pullach (DE)
(74) Vertreter: Imhof, Dietmar
(86) Internationale Anmeldenummer: PCT/EP2020/025150
(87) Internationale Veröffentlichungsnummer: WO 2020/200521

(56) Entgegenhaltungen:
- DE-A1- 4 207 941
- DE-A1-102011 003 391
- KR-A- 20030 046 252

## Beschreibung

Die Erfindung betrifft ein Verfahren zum Betreiben eines Wärmetauschers, eine Anordnung mit einem entsprechend betreibbaren Wärmetauscher und eine Anlage mit einer entsprechenden Anordnung gemäß den Oberbegriffen der jeweiligen unabhängigen Patentansprüche.

### Stand der Technik

In einer Vielzahl von Anwendungsgebieten werden Wärmetauscher (technisch korrekter: Wärmeübertrager) mit tiefkalten Fluiden, d.h. Fluiden mit Temperaturen von deutlich unter 0° C, insbesondere deutlich unter -100° C, betrieben. Nachfolgend wird die vorliegende Erfindung überwiegend unter Bezugnahme auf die Hauptwärmetauscher von Luftzerlegungsanlagen beschrieben, sie eignet sich jedoch grundsätzlich auch zum Einsatz in anderen Anwendungsgebieten, beispielsweise für Anlagen zum Speichern und Rückgewinnen von Energie unter Verwendung von Flüssigluft oder die Erdgasverflüssigung bzw. Anlagen in der Petrochemie.

Die vorliegende Erfindung eignet sich aus den nachfolgend erläuterten Gründen auch in besonderer Weise in Anlagen zur Verflüssigung gasförmiger Luftprodukte, beispielsweise von gasförmigem Stickstoff. Entsprechende Anlagen können insbesondere von Luftzerlegungsanlagen mit gasförmigem Stickstoff versorgt werden und diesen verflüssigen. Der Verflüssigung ist dabei nicht, wie in einer Luftzerlegungsanlage, eine Rektifikation nachgeschaltet. Daher können diese Anlagen bei Überwindung der nachfolgend erläuterten Probleme beispielsweise dann, wenn kein Bedarf an entsprechenden Verflüssigungsprodukten besteht, vollständig abgeschaltet und bis zur nächsten Verwendung im Standby gehalten werden.

Zum Aufbau und Betrieb von Hauptwärmetauschern von Luftzerlegungsanlagen und anderer Wärmetauscher sei auf einschlägige Fachliteratur, beispielsweise H.-W. Häring (Hrsg.), Industrial Gases Processing, Wiley-VCH, 2006, insbesondere Abschnitt 2.2.5.6, "Apparatus" verwiesen. Details zu Wärmetauschern allgemein sind beispielsweise der Veröffentlichung "The Standards of the Brazed Aluminium Plate-Fin Heat Exchanger Manufacturers' Association", 2. Auflage, 2000, insbesondere Abschnitt 1.2.1, "Components of an Exchanger" zu entnehmen.

Ohne zusätzliche Maßnahmen vollziehen Wärmetauscher von Luftzerlegungsanlagen und andere mit warmen und tiefkalten Medien durchströmte Wärmetauscher einen Temperaturausgleich und erwärmen sich beim Stillstand der zugehörigen Anlage und damit der Außerbetriebnahme des Wärmetauschers, bzw. das sich in einem entsprechenden Wärmetauscher im stationären Betrieb ausbildende Temperaturprofil kann in einem solchen Fall nicht gehalten werden. Wird anschließend beispielsweise bei der Wiederinbetriebnahme in einen erwärmten Wärmetauscher tiefkaltes Gas eingespeist oder umgekehrt, kommt es zu hohen thermischen Spannungen infolge unterschiedlicher Wärmedehnung wegen differentiellen Temperaturunterschieden, die zur Schädigung des Wärmetauschers führen können bzw. einen überproportional hohen Material- bzw. Fertigungsaufwand erfordern, um derartige Schädigungen zu vermeiden.

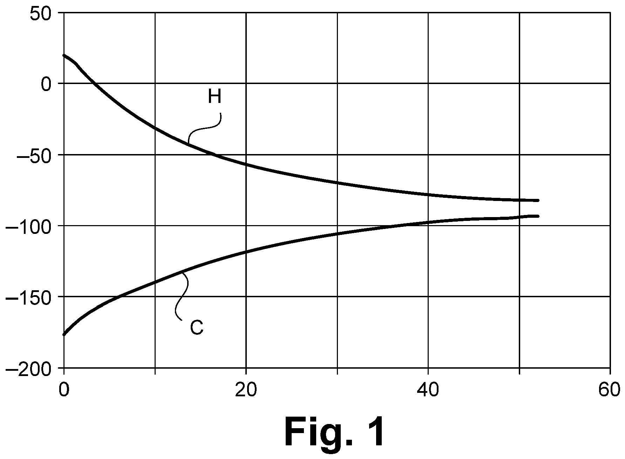

Insbesondere kommt es bei einer Außerbetriebnahme eines Wärmetauschers, bevor dieser sich insgesamt erwärmt, aufgrund der guten Wärmeleitung (Wärmelängsleitung) in dessen metallischem Material zu einem Angleich der Temperaturen am zuvor warmen Ende und am zuvor kalten Ende. Mit anderen Worten wird das zuvor warme Ende des Wärmetauschers über die Zeit kälter und das zuvor kalte Ende des Wärmetauschers wärmer, bis die genannten Temperaturen bei oder nahe bei einer Durchschnittstemperatur liegen. Dies ist auch in der beigefügten Figur 1 nochmals veranschaulicht. Die Temperaturen, die hier zum Zeitpunkt der Außerbetriebnahme bei ca. -175 °C bzw. +20 °C lagen, gleichen sich dabei über mehrere Stunden aneinander an und erreichen nahezu eine mittlere Temperatur.

Dieses Verhalten wird insbesondere dann beobachtet, wenn beim Abschalten einer Luftzerlegungsanlage der Hauptwärmetauscher, der kälteisoliert untergebracht ist, zusammen mit der Rektifikationseinheit eingeblockt wird, d.h. wenn von außen kein Gas mehr zugeführt wird. In einem solchen Fall wird typischerweise lediglich Gas, das durch thermische Isolationsverluste entsteht, kalt abgeblasen. Entsprechendes gilt auch, wenn eine Anlage zur Verflüssigung eines gasförmigen Luftprodukts, beispielsweise von Flüssigstickstoff, abgeschaltet wird.

Bei einer ggf. anschließend erfolgenden Einspeisung von warmem Fluid am abgekühlten warmen Ende des Wärmetauschers bei seiner Wiederinbetriebnahme erhöht sich dort schlagartig die Temperatur. Entsprechend verringert sich die Temperatur am erwärmten kalten Ende bei der Wiederinbetriebnahme, falls dort entsprechendes kaltes Fluid eingespeist wird, schlagartig. Dies führt zu den bereits erwähnten Materialspannungen und damit ggf. zu Schäden.

Aus der DE 42 07 941 A1 ist ein Verfahren zum Betreiben eines Wärmeaustauschers in einer diskontinuierlich arbeitenden Anlage zum Behandeln von Fluiden bekannt, bei dem während der von Stillstandszeiten unterbrochenen Betriebszeiten mindestens ein Kältemittel in ersten Kanälen des Wärmeaustauschers von dessen kaltem Ende zu dessen warmem Ende strömt und mindestens ein wärmeabgebendes oder zu kühlendes Fluid in zweiten Kanälen des Wärmeaustauschers von dessen warmem Ende zu dessen kaltem Ende strömt. Während der Stillstandszeiten wird dem warmen Ende Wärme und dem kalten Ende Kälte zugeführt wird, so dass diese beiden Enden auf Temperaturen gehalten werden, die relativ nahe bei den entsprechenden Temperaturen während der Betriebszeiten liegen, und zumindest die zugeführte Kälte oder die zugeführte Wärme wird von einem in der Anlage vorrätigen Fluid geliefert.

Die vorliegende Erfindung stellt sich die Aufgabe, weiter verbesserte Maßnahmen anzugeben, die eine Wiederinbetriebnahme eines entsprechenden Wärmetauschers, insbesondere in einer der zuvor genannten Anlagen, nach längerer Außerbetriebnahme ermöglichen, ohne dass die erwähnten nachteiligen Effekte auftreten.

### Offenbarung der Erfindung

Vor diesem Hintergrund schlägt die vorliegende Erfindung ein Verfahren zum Betreiben eines Wärmetauschers, eine Anordnung mit einem entsprechend betreibbaren Wärmetauscher und eine Anlage mit einer entsprechenden Anordnung mit den Merkmalen der jeweiligen unabhängigen Patentansprüche vor.

Zunächst werden nachfolgend einige zur Beschreibung der vorliegenden Erfindung verwendete Begriffe erläutert und definiert.

Ein "Wärmetauscher" ist im hier verwendeten Sprachgebrauch ein Apparat, der zur indirekten Übertragung von Wärme zwischen zumindest zwei z.B. im Gegenstrom zueinander geführten Fluidströmen ausgebildet ist. Ein Wärmetauscher zum Einsatz im Rahmen der vorliegenden Erfindung kann aus einem einzelnen oder mehreren parallel und/oder seriell verbundenen Wärmetauscherabschnitten gebildet sein, z.B. aus einem oder mehreren Plattenwärmetauscherblöcken. Die Erfindung eignet sich aber grundsätzlich auch für andere Arten von Wärmetauschern und ist nicht auf Plattenwärmetauscher beschränkt. Ein Wärmetauscher weist "Passagen" auf, die zur Fluidführung eingerichtet und von anderen Passagen durch Trennbleche getrennt bzw. nur über die jeweiligen Header ein- und ausgangsseitig verbunden sind. Die Trennung der Passagen nach außen erfolgt über Seitenstäbe (engl. Side Bars). Die genannten Passagen werden nachfolgend als "Wärmetauscherpassagen" bezeichnet. Nachfolgend werden, dem gängigen Sprachgebrauch folgend, die beiden Begriffe "Wärmetauscher" und "Wärmeübertrager" synonym verwendet. Entsprechendes gilt auch für die Begriffe "Wärmetausch" und "Wärmeaustausch".

Die vorliegende Erfindung betrifft insbesondere die gemäß der deutschen Fassung der ISO 15547-2:2005 als Rippen-Platten-Wärmeaustauscher (engl. Plate-Fin Heat Exchangers) bezeichnete Apparate. Ist nachfolgend von einem "Wärmetauscher" die Rede, sei daher hierunter insbesondere ein Rippen-Platten-Wärmeaustauscher verstanden. Ein Rippen-Platten-Wärmeaustauscher weist eine Vielzahl übereinanderliegender flacher Kammern bzw. langgestreckter Kanäle auf, die jeweils durch gewellte oder anderweitig strukturierte und miteinander verbundene, beispielsweise verlötete Platten, i.d.R. aus Aluminium, voneinander getrennt sind. Die Platten werden mittels Seitenstäben stabilisiert und über diese miteinander verbunden. Die Strukturierung der Wärmetauscherplatten dient insbesondere dazu, die Wärmeaustauschfläche zu vergrößern, aber auch dazu, die Stabilität des Wärmetauschers zu erhöhen. Die Erfindung bezieht sich insbesondere auf gelötete Rippen-Platten-Wärmeaustauscher aus Aluminium. Grundsätzlich können entsprechende Wärmetauscher aber auch aus anderen Materialien, beispielsweise aus Edelstahl, oder aus verschiedenen unterschiedlichen Materialien hergestellt sein.

Wie erwähnt, kann die vorliegende Erfindung in Luftzerlegungsanlagen bekannter Art, aber auch beispielsweise in Anlagen zum Speichern und Rückgewinnen von Energie unter Verwendung von Flüssigluft zum Einsatz kommen. Die Speicherung und Rückgewinnung von Energie unter Verwendung von Flüssigluft wird im Englischen auch als Liquid Air Energy Storage (LAES) bezeichnet. Eine entsprechende Anlage ist beispielsweise in der EP 3 032 203 A1 offenbart. Anlagen zur Verflüssigung von Stickstoff oder anderen gasförmigen Luftprodukten sind ebenfalls aus der Fachliteratur bekannt. Grundsätzlich kann die vorliegende Erfindung auch in beliebigen weiteren Anlagen zum Einsatz kommen, in denen ein Wärmeübertrager entsprechend betrieben werden kann. Es kann sich beispielsweise um Anlagen zur Erdgasverflüssigung und Trennung von Erdgas, die erwähnten LAES-Anlagen, Anlagen zur Luftzerlegung, Verflüssigungskreisläufe aller Art (insbesondere für Luft und Stickstoff) mit und ohne Luftzerlegung, Ethylenanlagen (also insbesondere Trennanlagen, die zur Bearbeitung von Gasgemischen aus Steamcrackern eingerichtet sind), Anlagen, in denen Kühlkreisläufe, beispielsweise mit Ethan oder Ethylen auf unterschiedlichen Druckniveaus zum Einsatz kommen, und Anlagen, in denen Kohlenmonoxid- und/oder Kohlendioxidkreisläufe vorgesehen sind, handeln.

Zu Zeiten hohen Stromangebots wird in LAES-Anlagen in einem ersten Betriebsmodus Luft unter entsprechendem Stromverbrauch verdichtet, abgekühlt, verflüssigt und in einem isolierten Tanksystem gespeichert. Zu Zeiten geringen Stromangebots wird in einem zweiten Betriebsmodus die in dem Tanksystem gespeicherte verflüssigte Luft, insbesondere nach einer Druckerhöhung mittels einer Pumpe, angewärmt und damit in den gasförmigen oder überkritischen Zustand überführt. Ein hierdurch erhaltener Druckstrom wird in einer Entspannungsturbine entspannt, die mit einem Generator gekoppelt ist. Die in dem Generator gewonnene elektrische Energie wird beispielsweise in ein elektrisches Netz zurückgespeist.

Eine entsprechende Speicherung und Rückgewinnung von Energie ist grundsätzlich nicht nur unter Verwendung von Flüssigluft möglich. Vielmehr können in dem ersten Betriebsmodus auch andere unter Verwendung von Luft gebildete tiefkalte Flüssigkeiten gespeichert und in dem zweiten Betriebsmodus zur Gewinnung von elektrischer Energie verwendet werden. Beispiele für entsprechende tiefkalte Flüssigkeiten sind flüssiger Stickstoff oder flüssiger Sauerstoff bzw. Komponentengemische, die überwiegend aus flüssigem Stickstoff oder flüssigem Sauerstoff bestehen. In entsprechenden Anlagen können auch externe Wärme und Brennstoff eingekoppelt werden, um die Effizienz und die Ausgangsleistung zu steigern, insbesondere unter Verwendung einer Gasturbine, deren Abgas zusammen mit dem im zweiten Betriebsmodus aus dem Luftprodukt gebildeten Druckstrom entspannt wird. Auch für derartige Anlagen eignet sich die Erfindung.

Zur Bereitstellung entsprechender tiefkalter Flüssigkeiten können klassische Luftzerlegungsanlagen dienen. Wenn Flüssigluft verwendet wird, ist es auch möglich, reine Luftverflüssigungsanlagen einzusetzen. Als Oberbegriff für Luftzerlegungsanlagen und Luftverflüssigungsanlagen wird daher nachfolgend auch der Begriff "Luftbearbeitungsanlagen" verwendet. Die Erfindung kann insbesondere auch bei bekannten Stickstoffverflüssigern zum Einsatz kommen.

### Vorteile der Erfindung

Grundsätzlich kann ein Wärmetauscher während eines Stillstands der zugehörigen Anlage mit kaltem Gas aus einem Tank oder Abgas aus der stehenden Anlage durchströmt werden, um eine Erwärmung zu vermeiden bzw. das im stationären Betrieb (d.h. insbesondere dem üblichen Produktionsbetrieb einer entsprechenden Anlage) ausgebildete Temperaturprofil zu halten. Ein derartiger Betrieb ist jedoch in herkömmlichen Verfahren ggf. nur aufwendig zu realisieren.

In bestimmten Fällen kann, wie beispielsweise auch in der US 5,233,839 A (siehe auch die eingangs erwähnte DE 42 07 941 A1) vorgeschlagen, zur Vermeidung der Abkühlung des warmen Endes eines entsprechenden Wärmetauschers dort auch eine Einleitung von Wärme aus der Umgebung über Wärmebrücken vorgenommen werden. Befindet sich stromab des Wärmetauschers keine Prozesseinheit mit signifikanter Pufferkapazität für Kälte (z.B. kein Rektifikationskolonnensystem mit Ansammlung kryogener Flüssigkeiten) wie beispielsweise in einer reinen Luftverflüssigungsanlage, so kann durch eine derartige Warmhaltung das Auftreten übermäßiger thermischer Spannungen beim schlagartigen Zuführen warmer Prozessströme am warmen Ende bei der Wiederinbetriebnahme reduziert werden. Die zugeführten warmen Prozessströme können in diesem Fall beispielsweise nach dem Austritt am kalten Ende des Wärmetauschers zumindest teilweise mittels einer Turbine entspannt und als kalte Ströme (die jedoch in diesem Fall noch nicht die tiefe Temperatur aufweisen, wie sie im Regelbetrieb am kalten Ende vorliegt) über das kalte Ende zum warmen Ende rückgeführt werden. Auf diese Weise kann der Wärmetauscher durch eine Joule-Thomson-Abkühlung langsam in sein Normaltemperaturprofil gefahren werden kann. Die vorliegende Erfindung kann auch in diesem Fall, also bei Prozessen, in denen nach dem Wiederanfahren das kalte Ende des Wärmetauschers nicht unmittelbar mit kalten Prozessströmen (auf der im Regelbetrieb vorliegenden Endtemperatur) beaufschlagt wird, eingesetzt werden.

Befindet sich jedoch, wie im Rahmen der vorliegenden Erfindung ebenfalls möglich, stromab des Wärmetauschers eine Prozesseinheit mit einer nennenswerten Pufferkapazität für Kälte (z.B. ein Rektifikationskolonnensystem mit Ansammlung kryogener Flüssigkeiten, wie in einer Luftzerlegungsanlage der Fall), so kann man mittels der zuvor beschriebenen Maßnahmen zwar das Auftreten von Thermospannungen am warmen Ende minimieren, am zugleich angewärmten kalten Ende kann es jedoch hier durch das schlagartige Einsetzen der Durchströmung mit kälterem Fluid zum Auftreten von Thermospannungen durch unzulässig hohe (zeitliche und örtliche) Temperaturgradienten kommen. Hierbei fördert die Warmhaltung des warmen Endes sogar noch die Bildung von höheren Temperaturunterschieden am kalten Ende und damit das Auftreten von erhöhten Thermospannungen.

Die vorliegende Erfindung betrifft also beide zuvor erläuterte Fälle. Mit anderen Worten kann im Rahmen der vorliegenden Erfindung (neben der stets vorgesehenen Erwärmung am warmen Ende des Wärmetauschers) das kalte Ende des Wärmetauschers während Stillstandsphasen unabgekühlt betrieben werden; es kann jedoch auch eine entsprechende Abkühlung erfolgen.

Die vorliegende Erfindung schlägt vor diesem Hintergrund ein Verfahren zum Betreiben eines Wärmetauschers vor. Der Wärmetauscher kann, wie nachfolgend auch noch im Detail erläutert, insbesondere Teil einer entsprechenden Anordnung sein, die ihrerseits als Teil einer größeren Anlage ausgebildet sein kann. Die vorliegende Erfindung kann insbesondere in Luftbearbeitungsanlagen der zuvor und nachfolgend noch im Detail erläuterten Art zum Einsatz kommen. Grundsätzlich ist jedoch auch ein Einsatz in anderen Einsatzgebieten möglich, in denen eine Durchströmung eines entsprechenden Wärmetauschers während bestimmter Zeiten unterbunden wird und sich der Wärmetauscher während dieser Zeiten erwärmt bzw. sich ein in dem Wärmetauscher ausgebildetes Temperaturprofil ausgleicht. Insbesondere kann die vorliegende Erfindung in einer Luftzerlegungsanlage und weniger in einem reinen Verflüssiger zum Einsatz kommen, da in ersterer eine entsprechende Pufferkapazität am kalten Ende vorliegt und daher das Kalthalten des kalten Endes während Stillstandsphasen erforderlich oder zumindest vorteilhaft ist.

Die vorliegende Erfindung betrifft dabei insbesondere solche Maßnahmen, die eine übermäßige thermische Beanspruchung des warmen Endes eines Wärmetauschers vermeiden. Derartige Maßnahmen können jedoch im Rahmen der vorliegenden Erfindung, wie bereits angesprochen, jederzeit mit weiteren Maßnahmen kombiniert werden, die auf eine Reduktion thermischer Spannungen am kalten Ende des Wärmetauschers gerichtet sind. So können die erfindungsgemäß vorgeschlagenen Maßnahmen und entsprechende Ausgestaltungen insbesondere auch in Kombination mit einer fluidischen oder nichtfluidischen Kühlung des kalten Endes des Wärmetauschers kombiniert werden, beispielsweise mit einer gezielten Durchströmung des kalten Teils des Wärmetauschers bzw. dessen kalten Endes unter Verwendung entsprechender kalter Gasströme. Beispielsweise kann die vorliegende Erfindung dabei mit solchen Maßnahmen kombiniert werden, wie sie in der zuvor bereits erwähnten US 5,233,839 A offenbart sind. Dies ist jedoch nicht obligatorisch. In sämtlichen Fällen kann sowohl das erfindungsgemäß vorgeschlagene Warmhalten des warmen Endes des Wärmetauschers, aber auch eine ggf. vorgesehene Kühlung unter Verwendung entsprechender Steuer- und/oder Regelstrategien auf Grundlage einer oder mehrerer gemessener Temperaturen an dem Wärmetauscher erfolgen. Die vorliegende Erfindung kann in einer Ausgestaltung insbesondere vorsehen, dass während einer Stillstandsphase der Anlage, deren Teil der diskutierte Wärmetauscher ist, ein kaltes Ende des Wärmetauschers oder der Wärmetauscher insgesamt auch beispielsweise mit abdampfendem Gas aus einem oder mehreren Speicherbehältern der Anlage durchströmt werden kann, wie grundsätzlich ebenfalls bereits in der erwähnten US 5,233,839 A beschrieben.

Eine derartige Temperierung während entsprechender Stillstandsphasen mit Boil-Off-Gas ermöglicht eine sinnvolle Nutzung ansonsten an die Umgebung abgeblasener kalter Gase und damit die zumindest teilweise Nutzung bzw. Rückgewinnung der zu deren Herstellung investierten Energie. Anstelle also, wie in derzeitigen Verfahren typischerweise der Fall, entsprechendes Boil-Off-Gas an die Umgebung abzublasen und auf diese Weise überhöhte Drücke und ggf. ein Auslösen von Sicherheitsventilen in einer entsprechenden Anlage zu verhindern, wird also in einer entsprechenden Ausgestaltung der vorliegenden Erfindung Gas zur Temperierung durch den Wärmetauscher geführt. Insbesondere eignet sich ein entsprechendes Verfahren damit für Anlagen zur Gewinnung tiefkalter Luftprodukte bzw. zur Verflüssigung von Luftgasen, da entsprechende tiefkalte Luftprodukte bzw. verflüssigte Luftgase typischerweise in Speicherbehältern gespeichert werden, in denen eine entsprechende Verdampfung auftritt. Eine derartige Verdampfung tritt jedoch auch in Rektifikationskolonnen auf, die Teil von Luftzerlegungsanlagen sind, und die daher ebenfalls entsprechend "entlüftet" werden müssen, um zu hohe Drücke in diesen Apparaten zu vermeiden.

Die vorliegende Erfindung schlägt vor, das Verfahren in ersten Zeiträumen in einem ersten Betriebsmodus und in zweiten Zeiträumen, die sich mit den ersten Zeiträumen abwechseln, in einem zweiten Betriebsmodus durchzuführen. Die ersten Zeiträume und die zweiten Zeiträume überlappen einander dabei im Rahmen der vorliegenden Erfindung nicht. Die ersten Zeiträume bzw. der in diesem ersten Zeitraum durchgeführte erste Betriebsmodus entspricht dabei im Rahmen der vorliegenden Erfindung dem Produktionsbetrieb einer entsprechenden Anlage, im Fall einer Luftgasverflüssigungsanlage also jenem Betriebszeitraum, in dem ein Verflüssigungsprodukt bereitgestellt wird, bzw. im Fall einer Luftzerlegungsanlage jenem Betriebsmodus, in dem flüssige und/oder gasförmige Luftprodukte durch Luftzerlegung bereitgestellt werden. Entsprechend stellt der zweite Betriebsmodus, der in den zweiten Betriebszeiträumen durchgeführt wird, einen Betriebsmodus dar, in dem entsprechende Produkte nicht gebildet werden. Entsprechende zweite Zeiträume bzw. ein zweiter Betriebsmodus dienen insbesondere zur Energieeinsparung, beispielsweise in Anlagen zur Verflüssigung und Rückverdampfung von Luftprodukten zur Energiegewinnung oder in den zuvor bereits erwähnten LAES-Anlagen.

Wie bereits erwähnt, wird der Wärmetauscher im zweiten Betriebsmodus vorzugsweise nicht bzw. in einem deutlich geringeren Umfang durchströmt als in dem ersten Betriebsmodus. Die vorliegende Erfindung schließt, wie bereits erwähnt, nicht aus, dass in dem zweiten Betriebsmodus auch gewisse Mengen an Gasen durch einen entsprechenden Wärmetauscher geführt werden, beispielsweise um diesen unterstützend zu den erfindungsgemäß vorgeschlagenen Maßnahmen auf Temperatur zu halten bzw. zu bringen. Die Menge durch den Wärmetauscher geführter Fluide in dem zweiten Betriebsmodus liegt jedoch stets deutlich unter den Mengen von Fluiden, die in einem regulären ersten Betriebsmodus durch den Wärmetauscher geführt werden. Die Menge der in dem zweiten Betriebsmodus durch den Wärmetauscher geführten Fluide beträgt im Rahmen der vorliegenden Erfindung beispielsweise insgesamt nicht mehr als 20%, 10%, 5% oder 1%, bezogen auf die in dem ersten Betriebsmodus durch den Wärmetauscher geführte Fluidmenge.

Im Rahmen der vorliegenden Erfindung werden der erste Betriebsmodus und der zweite Betriebsmodus in den jeweiligen Zeiträumen, wie erwähnt, abwechselnd durchgeführt, d.h. auf einen jeweiligen ersten Zeitraum, in dem der erste Betriebsmodus durchgeführt wird, folgt stets ein zweiter Zeitraum, in dem der zweite Betriebsmodus durchgeführt wird und auf den zweiten Zeitraum bzw. den zweiten Betriebsmodus sodann wieder ein erster Zeitraum mit dem ersten Betriebsmodus usw. Dies schließt jedoch insbesondere nicht aus, dass zwischen den jeweiligen ersten und zweiten Zeiträumen weitere Zeiträume mit weiteren Betriebsmodi vorgesehen sein können, insbesondere ein erfindungsgemäß ggf. vorgesehener dritter Zeitraum mit einem dritten Betriebsmodus. Im Rahmen der vorliegenden Erfindung ergibt sich für den Fall eines dritten Betriebsmodus dabei insbesondere die folgende Abfolge: erster Betriebsmodus - zweiter Betriebsmodus - dritter Betriebsmodus - erster Betriebsmodus usw.

Im Rahmen der vorliegenden Erfindung wird in dem ersten Betriebsmodus ein erster Fluidstrom auf einem ersten Temperaturniveau gebildet, in einem ersten Bereich auf dem ersten Temperaturniveau in den Wärmetauscher eingespeist, und in dem Wärmetauscher teilweise oder vollständig abgekühlt. Als ein entsprechender erster Fluidstrom kann dabei insbesondere ein zu verflüssigendes Gas oder Gasgemisch bzw. ein durch ein Gasgemischzerlegungsverfahren zu zerlegendes Gasgemisch verwendet werden, das stromauf in geeigneter Weise aufbereitet und konditioniert, beispielsweise aufgereinigt und verdichtet wurde. Auf den üblichen Betrieb von Luftzerlegungsanlagen wird an dieser Stelle verwiesen. Ein entsprechendes Gasgemischzerlegungsverfahren weist stets ein integriertes Gasverflüssigungsverfahren auf, d.h. ein Gas wird verflüssigt, bevor es zerlegt wird.

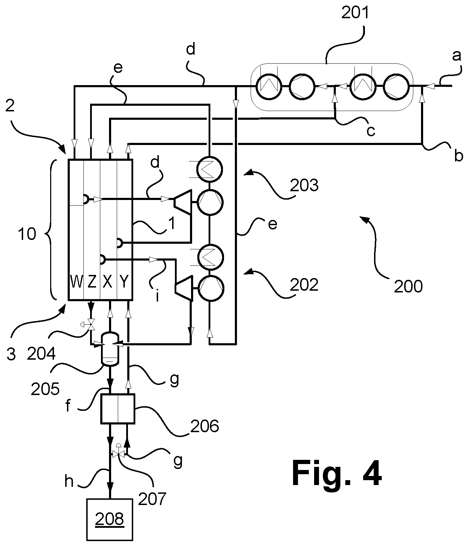

Ferner wird in dem ersten Betriebsmodus ein zweiter Fluidstrom auf einem zweiten Temperaturniveau gebildet, in einem zweiten Bereich auf dem zweiten Temperaturniveau in den Wärmetauscher eingespeist und in dem Wärmetauscher teilweise oder vollständig erwärmt. Die Bildung des zweiten Fluidstroms kann dabei insbesondere eine Entnahme aus einem Rektifikationskolonnensystem einer Luftzerlegungsanlage und/oder die Bildung eines Rückstroms in einer Gasverflüssigungsanlage darstellen. Zur Abkühlung des zu verflüssigenden Gases wird in Gasverflüssigungsanlagen ein Teil des unter Druck abgekühlten und ggf. bereits verflüssigten Gases insbesondere über Entspannungsturbinen entspannt, hierdurch weiter abgekühlt, und als entsprechender Rückstrom verwendet. Mit anderen Worten kann zur Abkühlung des zu verflüssigenden Gases ein Teil des unter Druck abgekühlten Gases arbeitsleistend entspannt, hierdurch abgekühlt, und als Kältemittel in einem Wärmetauscher verwendet. Ein zweiter Teil des unter Druck abgekühlten Gases, der nicht entsprechend entspannt wurde, wird in dem Wärmetauscher aufgrund des vorliegenden Druck- und Mengenunterschieds verflüssigt. Dies wird auch unter Bezugnahme auf Figur 4 unten nochmals erläutert.

Das zweite Temperaturniveau entspricht insbesondere der Entnahmetemperatur aus einem entsprechenden Rektifikationskolonnensystem bzw. der Temperatur, auf der ein entsprechender Rückstrom in einer Verflüssigungsanlage gebildet wird. Es liegt vorzugsweise bei kryogenen Temperaturen, insbesondere bei -50° C bis -200° C, beispielsweise bei -100° C bis -200° C oder bei -150° C bis -200° C. Hingegen liegt das erste Temperaturniveau, auf dem der erste Fluidstrom gebildet und dem Wärmetauscher in dem ersten Bereich zugeführt wird, vorzugsweise bei Umgehungstemperatur, jedenfalls aber typischerweise bei einem Temperaturniveau deutlich oberhalb von 0° C, beispielsweise von 10 °C bis 50 °C.

Ist hier davon die Rede, dass ein erster oder zweiter Fluidstrom auf dem ersten oder zweiten Temperaturniveau gebildet wird, ist hiermit selbstverständlich nicht ausgeschlossen, dass weitere Fluidströme auf dem ersten oder zweiten Temperaturniveau gebildet werden. Entsprechende weitere Fluidströme können eine gleiche oder andere Zusammensetzung wie bzw. als das Fluid des ersten oder zweiten Fluidstroms aufweisen. Beispielsweise kann einem Rektifikationskolonnensystem ein Fluid in Form eines Gesamtstroms entnommen werden, aus dem durch Abzweigen des zweiten Fluidstroms dieser gebildet wird. Ferner können im Rahmen der vorliegenden Erfindung ggf. auch mehrere Fluidströme dem Rektifikationskolonnensystem entnommen oder entsprechend gebildet und anschließend miteinander vereinigt und auf diese Weise zur Bildung des zweiten Fluidstroms verwendet werden. Außerdem kann kryogene Flüssigkeit von außen aus Tanks dem Rektifikationskolonnensystem zum Kalthalten zugeführt werden. Entsprechende Flüssigkeit kann in dem Rektifikationskolonnensystemverdampf und zum Hauptwärmetauscher und ggf. anderen zu kühlenden Apparaten geführt werden. Es kann also sowohl eine in dem Gasgemischzerlegungsverfahren gebildete als auch eine extern bereitgestellte tiefkalte Flüssigkeit verdampft und ein verdampfter Anteil der Flüssigkeit zumindest teilweise zum Kühlen des zweiten Bereichs verwendet werden.

Ist hier davon die Rede, dass ein Fluidstrom in dem Wärmetauscher "teilweise oder vollständig" abgekühlt bzw. erwärmt wird, sei hierunter verstanden, dass entweder der gesamte Fluidstrom durch den Wärmetauscher geführt wird, und zwar entweder von einem warmen Ende oder einem Zwischentemperaturniveau zum kalten Ende oder einem Zwischentemperaturniveau oder umgekehrt, oder dass der entsprechende Fluidstrom in dem Wärmetauscher in zwei oder mehrere Teilströme aufgeteilt wird, die dem Wärmetauscher auf gleichen oder unterschiedlichen Temperaturniveaus entnommen werden. Selbstverständlich ist auch möglich, dem jeweiligen Fluidstrom in dem Wärmetauscher einen weiteren Fluidstrom zuzuspeisen und einen auf diese Weise gebildeten Sammelstrom in dem Wärmetauscher weiter abzukühlen bzw. zu erwärmen. In jedem Fall wird jedoch ein entsprechender Fluidstrom in den Wärmetauscher eingespeist, und zwar auf dem ersten bzw. zweiten Temperaturniveau, und dieser wird in dem Wärmetauscher (alleine oder gemeinsam mit weiteren Strömen wie zuvor erläutert) abgekühlt bzw. erwärmt.

Es versteht sich ferner, dass neben dem ersten und zweiten Fluidstrom auch noch weitere Fluidströme in dem Wärmetauscher abgekühlt bzw. erwärmt werden können, und zwar auf gleiche oder unterschiedliche Temperaturniveaus und/oder ausgehend von gleichen oder unterschiedlichen Temperaturniveaus wie der erste bzw. der zweite Fluidstrom. Entsprechende Maßnahmen sind im Bereich der Luftzerlegung üblich und bekannt, so dass diesbezüglich auf einschlägige Fachliteratur, wie sie eingangs zitiert wurde, verwiesen werden kann.

In dem zweiten Betriebsmodus wird im Rahmen der vorliegenden Erfindung die Einspeisung des ersten Fluidstroms und des zweiten Fluidstroms in den Wärmetauscher und die jeweilige Abkühlung bzw. Erwärmung in dem Wärmetauscher teilweise oder vollständig ausgesetzt. Beispielsweise kann anstelle des ersten Fluidstroms, der in dem ersten Betriebsmodus durch den Wärmetauscher geführt und in dem Wärmetauscher abgekühlt wird, kein Fluid durch den Wärmetauscher geführt werden. Die Wärmetauscherpassagen des Wärmetauschers, die in dem ersten Betriebsmodus zur Abkühlung des ersten Fluidstroms verwendet werden, bleiben also in diesem Fall undurchströmt. Es ist jedoch auch möglich, anstelle des ersten Fluidstroms, der in dem ersten Betriebsmodus durch den Wärmetauscher geführt und abgekühlt wird, einen anderen Fluidstrom durch den Wärmetauscher zu führen, insbesondere in deutlich geringerer Menge. Entsprechendes gilt auch für den zweiten Fluidstrom, der in dem zweiten Betriebsmodus, wie erwähnt, insbesondere durch Boil-Off-Gas ersetzt werden kann.

Im Rahmen der Erfindung ist vorgesehen, dass in dem zweiten oder in einem dritten Zeitraum, der zwischen zumindest einem der zweiten Zeiträume und dem darauffolgenden ersten Zeitraum liegt, dem ersten Bereich Wärme zugeführt wird, die mittels einer Heizeinrichtung bereitgestellt wird, wobei diese Wärme erfindungsgemäß über einen außerhalb des Wärmetauschers befindlichen Gasraum, innerhalb dessen der erste Bereich angeordnet ist bzw. der den ersten Bereich umgibt, zu dem ersten Bereich übertragen wird. Die Wärmeübertragung erfolgt überwiegend oder ausschließlich ohne Festkörperkontakt, d.h. überwiegend oder ausschließlich in Form einer Wärmeübertragung im Gasraum, d.h. ohne oder überwiegend ohne Wärmeübertragung durch Festkörperwärmeleitung. Der Begriff "überwiegend" bezeichnet dabei hier einen Anteil an der Wärmemenge von weniger als 20% oder weniger als 10%.

Die vorliegende Erfindung sieht also vor, in dem zweiten Zeitraum oder in einem separaten weiteren Zeitraum eine aktive Erwärmung des warmen Endes eines entsprechenden Wärmetauschers durchzuführen. Der Begriff "außerhalb des Wärmetauschers" grenzt die vorliegende Erfindung dabei ab von einer alternativ ebenfalls möglichen Erwärmung mittels einer gezielten Fluiddurchströmung der Wärmetauscherpassagen. Die Erwärmung erfolgt also nicht durch Übertragung von Wärme von einem durch die Wärmetauscherpassagen geführten Fluid.

In diesem Zusammenhang sei insbesondere darauf hingewiesen, dass, wenn hier von einem "Bereich" eines Wärmetauschers (dem ersten Bereich bzw. dem zweiten Bereich) die Rede ist, sich derartige Bereiche nicht auf die unmittelbare Einspeisestelle des ersten bzw. zweiten Fluidstroms in den Wärmetauscher beschränken müssen, sondern dass diese Bereiche auch insbesondere terminale Abschnitte eines entsprechenden Wärmetauschers darstellen können, die sich eine vorgegebene Strecke in Richtung der Mitte des Wärmetauschers erstrecken können. Entsprechende Bereiche können dabei insbesondere die terminalen 10%, 20% oder 30% eines entsprechenden Wärmetauschers umfassen. Entsprechende Bereiche sind baulich typischerweise nicht dezidiert von dem Rest des Wärmetauschers abgegrenzt.

Die vorliegende Erfindung hat dabei den besonderen Vorteil, dass, beispielsweise im Gegensatz zu der erwähnten US 5,233,839 A keine Aufhängung eines entsprechenden Bereichs erforderlich ist, die dort zur Übertragung der Wärme vorgesehen ist. Die vorliegende Erfindung erlaubt damit eine Temperierung auch in Fällen, in denen ein Wärmetauscherblock in anderen Bereichen, beispielweise unten oder mittig, gelagert wird, um auf diese Weise die Spannungen auf die Leitungen, die einen entsprechenden Wärmetauscher mit der Umgebung verbinden, zu verringern. Das im Stand der Technik vorgestellte Verfahren kann hingegen nur zum Einsatz kommen, wenn ein entsprechender Wärmetauscherblock oben abgehängt wird. Ein weiterer Nachteil des im erwähnten Stand der Technik beschriebenen Verfahrens ist es, dass Wärme dort nur begrenzt an den Auflagern eingebracht wird und nicht über die gesamte Fläche eines Wärmetauschers in einem entsprechenden Bereich. Hierdurch kann es beispielsweise zu Auseisungen an den Blechmantelübergängen eines entsprechenden Wärmetauschers kommen. Die vorliegende Erfindung ermöglicht demgegenüber eine vorteilhafte Einbringung von Wärme und auf diese Weise eine effektive Temperierung ohne die zuvor beschriebenen Nachteile.

Insbesondere kann im Rahmen der vorliegenden Erfindung vorgesehen sein, die Wärme über den Gasraum zumindest teilweise konvektiv und/oder radiativ zu dem ersten Bereich zu übertragen. Zu konvektiven Wärmeübertragung kann dabei insbesondere eine Gasverwirbelung induziert werden, so dass sich Wärmestaus vermeiden lassen. Eine reine Strahlungsheizung kann hingegen direkt über die entsprechende Infrarotstrahlung auf die den ersten Bereich des ersten Wärmetauschers einwirken.

Der zweite Bereich des Wärmetauschers kann im Rahmen der vorliegenden Erfindung ohne aktive Wärmeabfuhr und damit unabgekühlt betrieben werden, während in dem zweiten Zeitraum oder in dem dritten Zeitraum dem ersten Bereich die Wärme zugeführt wird. Hierbei soll der Begriff "aktive Wärmeabfuhr" eine intentionell herbeigeführte Wärmeabgabe an die Umgebung bezeichnen, beispielsweise indem der zweite Bereich mit einem Fluid beaufschlagt, d.h. kontaktiert oder durchströmt, wird, das eine geringere Temperatur als der zweite Bereich zum jeweiligen Zeitpunkt der Fluidbeaufschlagung aufweist. Eine Wärmeabfuhr kann auch hier gleichwohl stattfinden, beispielsweise indem Wärme zu kälteren Bereichen abströmt. Es erfolgt jedoch in dieser Ausgestaltung der Erfindung keine Fluiddurchströmung, die eine Abkühlung des zweiten Bereichs bewirkt.

Im Rahmen dieser Ausgestaltung der vorliegenden Erfindung wird insbesondere eine Erwärmung des zweiten Bereichs zugelassen, während in dem zweiten Zeitraum oder in dem dritten Zeitraum gleichzeitig dem ersten Bereich die Wärme zugeführt wird. Die zugelassene Erwärmung kann insbesondere mehr als 10 K, mehr als 20 K, mehr als 30 K, mehr als 40 K oder mehr als 50 K betragen. Sie kann bei entsprechender Dauer auch insbesondere auf eine Temperatur erfolgen, auf die das erste Ende durch die Zufuhr der Wärme in dem zweiten Zeitraum oder in dem dritten Zeitraum erwärmt wird. Die Erwärmung des zweiten Bereichs kann insbesondere auch zumindest teilweise durch die aktive Erwärmung des ersten Bereichs und eine Wärmeeinströmung durch Wärmeleitung erfolgen.

Die Ausgestaltung vorliegenden Erfindung ohne aktive Kühlung beruht auf der Erkenntnis, dass eine derartige Kühlung in bestimmten Fällen nicht erforderlich ist. Der Betrieb des Wärmetauschers bietet durch den Verzicht auf die genannten Maßnahmen deshalb Vorteile, weil hierdurch sowohl der Verbrauch kalter Fluide reduziert wird als auch entsprechende Hardware sowie Steuer- und Regelungstechnik nicht aufwendig bereitgestellt werden muss.

Im Gegensatz zu einer Temperierung des warmen und des kalten Endes kann das Warmhalten des warmen Endes des Wärmetauschers ohne eine Kühlung am kalten Ende einfacher und kostengünstiger erfolgen. Es ist insbesondere nicht vorsehen, dass während einer Stillstandsphase der Anlage, deren Teil der diskutierte Wärmetauscher ist, ein kaltes Ende des Wärmetauschers oder der Wärmetauscher insgesamt mit abdampfendem Gas aus einem oder mehreren Speicherbehältern der Anlage durchströmt wird, wie in der erwähnten US 5,233,839 A beschrieben.

Das Verfahren gemäß der zuletzt erläuterten Ausgestaltung eignet sich insbesondere zum Einsatz im Rahmen eines Gasverflüssigungsverfahrens, beispielsweise im Rahmen eines Verfahrens zur Verflüssigung von Stickstoff, von Luft oder von Erdgas, bei dem ein entsprechend verflüssigtes Gasgemisch keiner Zerlegung zugeführt wird. In dem Gasverflüssigungsverfahren ist, mit anderen Worten, vorgesehen, den ersten Fluidstrom zumindest teilweise zu verflüssigen und unzerlegt, d.h. in im Wesentlichen unveränderter stofflicher Zusammensetzung als Verfahrensprodukt bereitzustellen. Gewisse, jedoch im Vergleich zur Zerlegung geringfügige Veränderungen können sich durch die Verflüssigung selbst aufgrund der unterschiedlichen Kondensationstemperaturen ergeben.

Wie ebenfalls erläutert, kann jedoch der zweite Bereich zumindest zeitweise gekühlt werden, während im ersten Bereich in dem zweiten Zeitraum oder in dem dritten Zeitraum die Wärme zugeführt wird. Ein entsprechendes Verfahren gemäß dieser Ausgestaltung eignet sich insbesondere zum Einsatz im Rahmen eines Gasgemischzerlegungsverfahrens, insbesondere eines Luftzerlegungsverfahrens, weil hier ein kryogenes Rektifikationskolonnensystem bereitgestellt ist, in dem entsprechend kalte Fluide gespeichert werden. Diese werden typischerweise kalt dem zweiten Bereich des Wärmetauschers zugeführt. Durch eine entsprechende Kühlung kann vermieden werden, dass bei erneuter Inbetriebnahme das kalte Ende mit Kaltfluid beaufschlagt wird, das thermische Spannungen verursacht. In dem Gasgemischzerlegungsverfahren kann insbesondere zur Kühlung entsprechendes Boil-Off-Gas eingesetzt werden, es kann also gebildete Flüssigkeit verdampft und ein verdampfter Anteil der Flüssigkeit zumindest teilweise zum Kühlen des zweiten Bereichs verwendet werden.

Die vorliegende Erfindung erstreckt sich auf eine Anordnung mit einem Wärmetauscher, wobei die Anordnung Mittel aufweist, die dafür eingerichtet sind, in ersten Zeiträumen einen ersten Betriebsmodus durchzuführen und in zweiten Zeiträumen, die sich mit den ersten Zeiträumen abwechseln, einen zweiten Betriebsmodus durchzuführen, in dem ersten Betriebsmodus einen ersten Fluidstrom auf einem ersten Temperaturniveau zu bilden, in einem ersten Bereich auf dem ersten Temperaturniveau in den Wärmetauscher einzuspeisen, und in dem Wärmetauscher teilweise oder vollständig abzukühlen, in dem ersten Betriebsmodus ferner einen zweiten Fluidstrom auf einem zweiten Temperaturniveau zu bilden, in einem zweiten Bereich auf dem zweiten Temperaturniveau in den Wärmetauscher einzuspeisen, und in dem Wärmetauscher teilweise oder vollständig zu erwärmen, und in dem zweiten Betriebsmodus die Einspeisung des ersten Fluidstroms und des zweiten Fluidstroms in den Wärmetauscher teilweise oder vollständig auszusetzen.

Es ist eine Heizeinrichtung vorgesehen, die Teil der Anordnung ist und dafür eingerichtet ist, entweder in dem zweiten Zeitraum oder in einem dritten Zeitraum, der zwischen zumindest einem der zweiten Zeiträume und dem darauffolgenden ersten Zeitraum liegt, dem ersten Bereich Wärme zuzuführen, die mittels einer Heizeinrichtung bereitgestellt und erfindungsgemäß über einen außerhalb des Wärmetauschers befindlichen Gasraum, der ebenfalls Teil der Anordnung ist und in dem der erste Bereich angeordnet ist bzw. welcher den ersten Bereich umgibt, zu dem ersten Bereich übertragen wird.

Zu weiteren Aspekten einer derartigen Anordnung sei auf die obigen Erläuterungen bezüglich des erfindungsgemäßen Verfahrens und seiner Ausgestaltungen ausdrücklich verwiesen. Die erfindungsgemäße Anordnung profitiert von den Vorteilen, die für entsprechende Verfahren und Verfahrensvarianten beschrieben wurden.

Vorteilhafterweise ist der Wärmetauscher im Rahmen der vorliegenden Erfindung in einer Coldbox angeordnet, die ebenfalls Teil der Anordnung ist, wobei der Gasraum durch einen an Isoliermaterial freien Bereich innerhalb der Coldbox gebildet ist. Der erste Bereich des Wärmetauschers ist dabei insbesondere ohne den ersten Bereich kontaktierende Aufhängungen in dem Gasraum innerhalb der Coldbox angeordnet. Auch zu dem diesbezüglichen Vorteil sei auf die obigen Erläuterungen verwiesen.

Im Rahmen der vorliegenden Erfindung kann die Heizeinrichtung als Heizstrahler ausgebildet sein, die beispielsweise elektrisch oder unter Verwendung von Heizgas beheizt werden kann.

Die vorliegende Erfindung erstreckt sich ferner auf eine Anlage, die dadurch gekennzeichnet ist, dass hier eine Anordnung aufweist, wie sie zuvor erläutert wurde.

Die Anlage kann insbesondere als Gasverflüssigungsanlage oder Gasgemischzerlegungsanlage ausgebildet sein. Sie zeichnet sich ferner insbesondere dadurch aus, dass sie zur Durchführung eines Verfahrens eingerichtet ist, wie es zuvor in Ausgestaltungen erläutert wurde. Wie erläutert, ist in einer typischen Gasgemischzerlegungsanlage typischerweise eine Gasverflüssigung vorgesehen, und das verflüssigte Gas wird anschließend zerlegt.

Die Erfindung wird nachfolgend unter Bezugnahme auf die beigefügten Zeichnungen näher erläutert, die eine Ausführungsform der Erfindung und entsprechende Wärmeaustauschdiagramme zeigen.

### Kurze Beschreibung der Zeichnungen

Figur 1 veranschaulicht Temperaturverläufe in einem Wärmetauscher nach Außerbetriebnahme ohne Einsatz von Maßnahmen gemäß einer Ausgestaltung der vorliegenden Erfindung.
Figur 2 veranschaulicht eine Anordnung mit einem Wärmetauscher gemäß einer besonders bevorzugten Ausführungsform der Erfindung.
Figur 3 veranschaulicht eine Luftzerlegungsanlage, die mit einer Anordnung gemäß einer Ausführungsform der Erfindung ausgestattet sein kann.
Figur 4 veranschaulicht eine Gasverflüssigungsanlage, die mit einer Anordnung gemäß einer Ausführungsform der Erfindung ausgestattet sein kann.

In den Figuren sind identische oder einander funktional oder bedeutungsmäßig entsprechende Elemente mit identischen Bezugszeichen angegeben und werden der Übersichtlichkeit halber nicht wiederholt erläutert.

### Ausführliche Beschreibung der Zeichnungen

Figur 1 veranschaulicht Temperaturverläufe in einem Wärmetauscher nach Außerbetriebnahme (der Wärmetauscher wird dabei nicht durchströmt) ohne Einsatz von Maßnahmen gemäß vorteilhaften Ausgestaltungen der vorliegenden Erfindung in Form eines Temperaturdiagramms.

In dem in Figur 1 dargestellten Diagramm sind eine mit H bezeichnete Temperatur am warmen Ende eines entsprechenden Wärmetauschers und eine mit C bezeichnete Temperatur am kalten Ende jeweils in °C auf der Ordinate gegenüber einer Zeit in Stunden auf der Abszisse dargestellt.

Wie aus Figur 1 ersichtlich, beträgt die Temperatur H am warmen Ende des Wärmeaustauschers zu Beginn der Außerbetriebnahme, die noch der Temperatur in einem regulären Betrieb des Wärmetauschers entspricht, ca. 20 °C und die Temperatur C am kalten Ende ca. -175 °C. Diese Temperaturen gleichen sich über die Zeit zunehmend einander an. Hierfür ist die hohe Wärmeleitfähigkeit der in dem Wärmetauscher verbauten Materialien verantwortlich. Mit anderen Worten fließt hier Wärme vom warmen Ende in Richtung des kalten Endes. Zusammen mit dem Wärmeeintrag aus der Umgebung ergibt sich eine mittlere Temperatur von ca. -90 °C. Die deutliche Temperaturerhöhung am kalten Ende kommt zum größten Teil durch den internen Temperaturausgleich in dem Wärmetauscher zustande und nur in einem geringeren Anteil durch externen Wärmeeintrag.

Wie mehrfach erwähnt, kann es im dargestellten Fall zu starken thermischen Spannungen kommen, wenn das warme Ende des Wärmetauschers nach einiger Zeit der Regeneration ohne weitere Maßnahmen wieder mit einem warmen Fluid von im dargestellten Beispiel ca. 20 °C beaufschlagt wird. Entsprechend kann es aber auch zu thermischen Spannungen kommen, wenn eine dem Wärmetauscher nachgeschaltete Anlage sofort wieder tiefkalte Fluide liefert, beispielsweise tiefkalte Flüssigkeiten aus einem Rektifikationskolonnensystem einer Luftzerlegungsanlage. Die vorliegende Erfindung adressiert gemäß einer Ausgestaltung auch das letztere Problem.

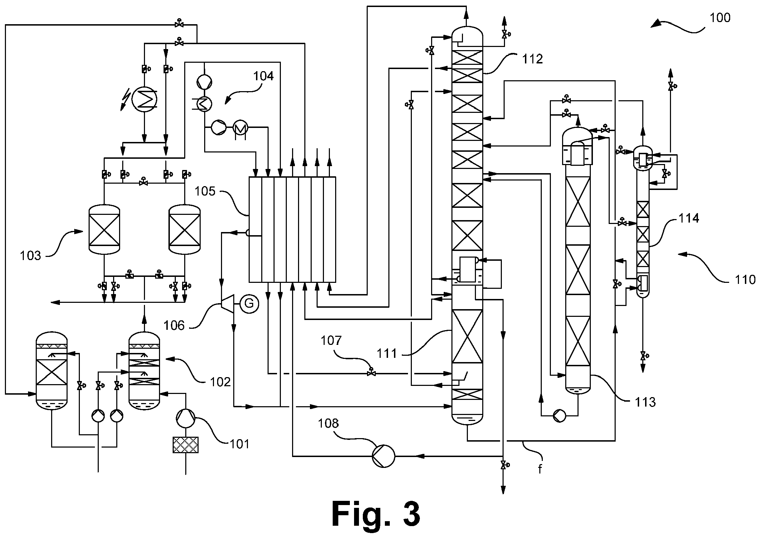

In Figur 3 ist eine Anordnung mit einem Wärmetauscher gemäß einer besonders bevorzugten Ausgestaltung der vorliegenden Erfindung veranschaulicht und insgesamt mit 10 bezeichnet. Der Wärmetauscher ist mit dem Bezugszeichen 1 versehen. Er weist einen ersten Bereich 2 und einen zweiten Bereich 3 auf, die hier jeweils durch punktierte Linien abgegrenzt veranschaulicht sind, in der Realität jedoch nicht baulich von einem Rest des Wärmetauschers 1 unterschieden sind. Der erste Bereich 2 und der zweite Bereich 3 sind insbesondere durch die Einspeisung bzw. Entnahme von Fluidströmen gekennzeichnet. Im dargestellten Beispiel werden durch den Wärmetauscher 1 zwei Fluidströme A und B geführt, wobei der Fluidstrom A zuvor als erster Fluidstrom und der Fluidstrom B zuvor als zweiter Fluidstrom bezeichnet wurde. Der erste Fluidstrom A wird in dem Wärmetauscher 1 abgekühlt, der zweite Fluidstrom B hingegen erwärmt. Zu weiteren Details sei auf die obigen Erläuterungen verwiesen. Es sei insbesondere betont, dass in dem mehrfach erläuterten zweiten Betriebsmodus der Wärmetauscher nicht oder nicht in dem Umfang wie in dem ersten Betriebsmodus von den entsprechenden Fluidströmen A und B durchströmt wird. Beispielsweise können im zweiten Betriebsmodus andere als die Fluidströme A und B bzw. die Fluidströme A und B in geringerer Menge verwendet werden.

Der Wärmetauscher 1 ist in der Anordnung 10 in einer Coldbox 4 aufgenommen, die teilweise mit einem Isoliermaterial, beispielsweise Perlit, gefüllt ist, das bis zu einer Füllhöhe 6 in der Coldbox 4 angeordnet und hier schraffiert veranschaulicht ist. Ein an dem Isoliermaterial freier Bereich, der zugleich einen den ersten Bereich 2 des Wärmetauscher 1 umgebenden Gasraum darstellt, ist mit 5 angegeben.

In der Anordnung 10 ist eine Heizeinrichtung 7 vorgesehen, die während gewisser Zeiträume des zweiten Betriebsmodus, während des gesamten zweiten Betriebsmodus oder, wie erwähnt, in separaten Zeiträumen in einem dritten Betriebsmodus den ersten Bereich 2 des Wärmetauschers 1 erwärmt. Hierzu kann mittels der Heizeinrichtung 7 in der Anordnung 10 Wärme, hier in Form eines gewellten Pfeils 8 veranschaulicht, auf das erste Ende 2 bzw. den ersten Bereich 2 des Wärmetauschers 1 übertragen werden. In dem ersten Betriebsmodus erfolgt typischerweise keine entsprechende Wärmeübertragung. Der zweite Bereich 3 des Wärmetauschers bleibt dabei im dargestellten Beispiel unabgekühlt bzw. wird von diesem keine Wärme aktiv abgeführt. In Ausgestaltungen der Erfindung ist jedoch auch eine derartige Wärmeabfuhr möglich, beispielsweise indem der zweite Bereich 3 mittels eines tiefkalten Fluids, beispielsweise mit einem Boil-Off-Gas aus einer nachgeschalteten Anlage, beispielsweise einer Luftzerlegungsanlage, durchströmt wird.

Figur 3 veranschaulicht eine Luftzerlegungsanlage mit einer Anordnung mit einem Wärmetauscher, die unter Verwendung eines Verfahrens gemäß einer vorteilhaften Ausgestaltung der vorliegenden Erfindung betrieben werden kann.

Luftzerlegungsanlagen der gezeigten Art sind, wie erwähnt, vielfach an anderer Stelle beschrieben, beispielsweise bei H.-W. Häring (Hrsg.), Industrial Gases Processing,

Wiley-VCH, 2006, insbesondere Abschnitt 2.2.5, "Cryogenic Rectification". Für detaillierte Erläuterungen zu Aufbau und Funktionsweise sei daher auf entsprechende Fachliteratur verwiesen. Eine Luftzerlegungsanlage zum Einsatz der vorliegenden Erfindung kann auf unterschiedlichste Weise ausgebildet sein. Der Einsatz der vorliegenden Erfindung ist nicht auf die Ausgestaltung gemäß Figur 6 beschränkt.

Die in Figur 3 gezeigte Luftzerlegungsanlage ist insgesamt mit 100 bezeichnet. Sie verfügt unter anderem über einen Hauptluftverdichter 101, eine Vorkühleinrichtung 102, ein Reinigungssystem 103, eine Nachverdichteranordnung 104, einen Hauptwärmetauscher 105, der den Wärmetauscher 1 wie zuvor erläutert darstellen kann und insbesondere Teil einer entsprechenden Anordnung 10 ist, eine Entspannungsturbine 106, eine Drosseleinrichtung 107, eine Pumpe 108 und ein Destillationssäulensystem 110. Das Destillationssäulensystem 110 umfasst im dargestellten Beispiel eine klassische Doppelsäulenanordnung aus einer Hochdrucksäule 111 und einer Niederdrucksäule 112 sowie eine Rohargonsäule 113 und eine Reinargonsäule 114.

In der Luftzerlegungsanlage 100 wird ein Einsatzluftstrom mittels des Hauptluftverdichters 101 über ein nicht bezeichnetes Filter angesaugt und verdichtet. Der verdichtete Einsatzluftstrom wird der mit Kühlwasser betriebenen Vorkühleinrichtung 102 zugeführt. Der vorgekühlte Einsatzluftstrom wird in dem Reinigungssystem 103 aufgereinigt. In dem Reinigungssystem 103, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 103 wird der Einsatzluftstrom in zwei Teilströme aufgeteilt. Einer der Teilströme wird auf dem Druckniveau des Einsatzluftstroms in dem Hauptwärmetauscher 105 vollständig abgekühlt. Der andere Teilstrom wird in der Nachverdichteranordnung 104 nachverdichtet und ebenfalls in dem Hauptwärmetauscher 105 abgekühlt, jedoch nur auf ein Zwischentemperaturniveau. Dieser sogenannte Turbinenstrom wird nach der Abkühlung auf das Zwischentemperaturniveau mittels der Entspannungsturbine 106 auf das Druckniveau des vollständig abgekühlten Teilstroms entspannt, mit diesem vereinigt, und in die Hochdrucksäule 111 eingespeist.

In der Hochdrucksäule 111 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdrucksäule 111 abgezogen, teilweise als Heizmedium in einem Sumpfverdampfer der Reinargonsäule 114 verwendet und jeweils in definierten Anteilen in einen Kopfkondensator der Reinargonsäule 114, einen Kopfkondensator der Rohargonsäule 113 sowie die Niederdrucksäule 112 eingespeist. In den Verdampfungsräumen der Kopfkondensatoren der Rohargonsäule 113 und der Reinargonsäule 114 verdampfendes Fluid wird ebenfalls in die Niederdrucksäule 112 überführt.

Vom Kopf der Hochdrucksäule 111 wird das gasförmige stickstoffreiche Kopfprodukt g abgezogen, in einem Hauptkondensator, der eine wärmetauschende Verbindung zwischen der Hochdrucksäule 111 und der Niederdrucksäule 112 herstellt, verflüssigt, und in Anteilen als Rücklauf auf die Hochdrucksäule 111 aufgegeben und in die Niederdrucksäule 112 entspannt.

In der Niederdrucksäule 112 werden eine sauerstoffreiche flüssige Sumpffraktion sowie eine stickstoffreiche gasförmige Kopffraktion gebildet. Erstere wird teilweise in der Pumpe 108 flüssig auf Druck gebracht, in dem Hauptwärmetauscher 105 erwärmt, und als Produkt bereitgestellt. Aus einer Flüssigkeitsrückhalteeinrichtung am Kopf der Niederdrucksäule 112 wird ein flüssiger stickstoffreicher Strom abgezogen und als Flüssigstickstoffprodukt aus der Luftzerlegungsanlage 100 ausgeführt werden. Ein vom Kopf der Niederdrucksäule 112 abgezogener gasförmiger stickstoffreicher Strom wird durch den Hauptwärmetauscher 105 geführt und als Stickstoffprodukt auf dem Druck der Niederdrucksäule 112 bereitgestellt. Aus der Niederdrucksäule 112 wird ferner ein Strom aus einem oberen Bereich abgezogen und nach Erwärmung in dem Hauptwärmetauscher 105 als sogenannter Unreinstickstoff in der Vorkühleinrichtung 102 bzw. nach einer Aufheizung mittels eines elektrischen Heizers in dem Reinigungssystem 103 verwendet.

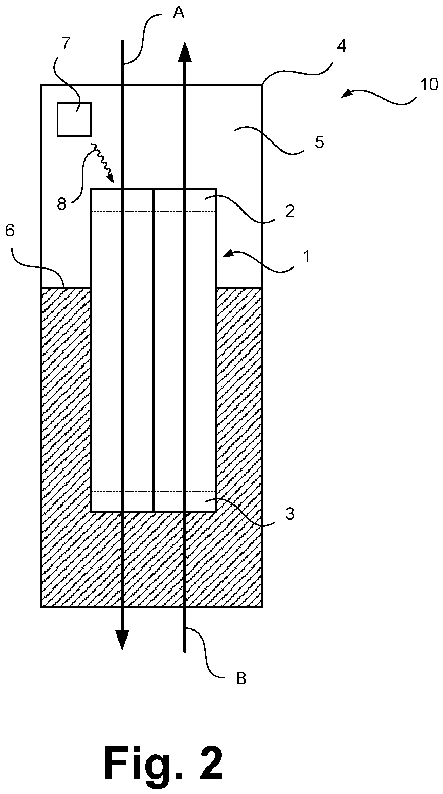

In Figur 4 ist eine Luftverflüssigungsanlage 200 mit einer Anordnung 10, welche einen Wärmetauscher 1 aufweist, schematisch veranschaulicht. Eine entsprechende Anlage wird auch als "Stickstoffverflüssiger" bezeichnet. Zu weiteren Details bezüglich der Anordnung 10 sei insbesondere auf die zuvor erläuterte Figur 2 verwiesen. Die Luftverflüssigungsanlage 200 dient beispielsweise zur Bereitstellung von Flüssigstickstoff bzw. zur Verflüssigung von gasförmigem Stickstoff. Zur Bereitstellung des gasförmigen Stickstoffs kann beispielsweise eine Luftzerlegungsanlage vorgesehen sein, wie sie zuvor veranschaulicht wurde.

Wie mehrfach zuvor erläutert, eignet sich die vorliegende Erfindung auch für die Verwendung im Zusammenhang mit Anlagen zur Verflüssigung gasförmiger Luftprodukte, an die selbst kein weiteres Rektifikationssystem mehr angebunden ist, die daher bei Bedarf vereinfacht und häufiger außer Betrieb gesetzt werden können, und in denen nach der Wiederinbetriebnahme noch kein kaltes Fluid bereitsteht, mit dem das kalte Ende des Wärmetauschers 1 unmittelbar beaufschlagt wird.

Der Wärmetauscher 1 ist auch hier mit dem ersten Bereich 2 und dem zweiten Bereich 3 veranschaulicht. Diese Bereiche sind hier jedoch nur angedeutet. Wie nachfolgend im Detail erläutert, werden in einem ersten Betriebsmodus dem Wärmeaustauscher 1 mehrere abzukühlende erste Fluide in dem ersten Bereich 2 auf einem ersten Temperaturniveau zugeführt und durch den Wärmeaustauscher 1 geführt, und dem Wärmetauscher 1 werden in dem ersten Betriebsmodus mehrere zu erwärmende zweite Fluide in dem zweiten Bereich 3 auf einem zweiten Temperaturniveau unterhalb des ersten Temperaturniveaus zugeführt und durch den Wärmeaustauscher 1 geführt. Die ersten Fluide werden dabei abgekühlt, die zweiten Fluide erwärmt.

Der Wärmeaustauscher 1 weist hier eine Anzahl von Wärmetauscherpassagen auf, die mit W bis Z bezeichnet sind. In dem ersten Betriebsmodus, der in Figur 3 veranschaulicht ist, und der einem Normalbetrieb der Verflüssigungsanlage 200 entspricht, d.h. einem Produktionsbetrieb, wird ein gasförmiger Stickstoffstrom a zusammen mit einem Stickstoffstrom b in einer mehrstufigen Verdichteranordnung 201, welcher auf einer Zwischenstufe ein weiterer Stickstoffstrom c zugespeist wird, auf ein Verflüssigungsdruckniveau verdichtet. Der entsprechend verdichtete Stickstoff wird auf zwei Teilströme d und e aufgeteilt, von denen der Teilstrom d dem Wärmetauscher 1 bzw. dessen erstem Bereich 2 zugeführt wird. Der Teilstrom e wird in zwei Turbinenboostern 202 und 203 weiter verdichtet und anschließend ebenfalls dem Wärmetauscher 1 bzw. dessen erstem Bereich 2 zugeführt.

In dem zweiten Bereich 3 wird dem Wärmetauscher 1 verflüssigter Stickstoff, bei dem es sich um einen Teil des Teilstroms e handelt, entnommen. Dieser verflüssigte Stickstoff wird über ein Ventil 204 in einen Behälter 205 geflasht. Vom Boden des Behälters 205 abgezogener flüssiger Stickstoff kann in Form eines flüssigen Stickstoffstroms f dem warmen Ende eines Unterkühlers 206 zugeführt werden, welcher unter Verwendung eines Teilstroms g des flüssigen Stickstoffstroms f, dessen Menge über ein Ventil 207 eingestellt wird, gekühlt wird. Der Teilstrom g wird nach Verdampfung in dem Unterkühler 206 in dem Wärmetauscher 1 weiter erwärmt und in Form des bereits erwähnten Stickstoffstroms b zur Verdichtung zurückgeführt. Der verbleibende Rest des flüssigen Stickstoffstroms f, hier in Form eines flüssigen Stickstoffstroms h veranschaulicht, kann beispielsweise als Produkt abgegeben bzw. in einen Tank 208 eingespeichert werden.

Die Turbinenbooster 202 und 203 werden unter Verwendung des Teilstroms d und eines weiteren Teilstroms des Teilstroms e, der hier mit i bezeichnet ist, angetrieben. Die Teilströme d und i werden dabei jeweils auf geeigneten Zwischentemperaturen dem Wärmetauscher 1 entnommen. Der entsprechend entspannte Teilstrom d wird dem Wärmetauscher 1 auf einer Zwischentemperatur zugeführt, in dem Wärmetauscher 1 mit Stickstoff, der gasförmig vom Kopf des Behälters 206 abgezogen und dem Wärmetauscher 1 am kalten Ende zugeführt wird, vereinigt, erwärmt und in Form des bereits erwähnten Stickstoffstroms c zur Verdichtung zurückgeführt. Der Teilstrom i wird nach einer entsprechenden Entspannung in den Behälter 205 eingespeist.

Es versteht sich, dass in einem zweiten Betriebsmodus, in dem die Einspeisung der erwähnten Fluidströme in den Wärmetauscher 1 ausgesetzt wird, ein zu Figur 1 erläuterter Temperaturausgleich einsetzt. Daher werden die zu Figur 2 erläuterten Maßnahmen ergriffen. Da hier kein kältepufferndes Rektifikationskolonnensystem kaltseitig des Wärmetauschers 1 bereitgestellt ist, wird der zweite Bereich 3 bei Wiederinbetriebnahme nicht unmittelbar mit kaltem Fluid beaufschlagt, sondern dieser kann durch die Entspannung in den Ventilen 204 und 207 sukzessive kaltgefahren werden. Eine Erwärmung am warmen Ende reicht daher aus.

## Patentansprüche

1. Verfahren zum Betreiben eines Wärmetauschers (1), bei dem
- in ersten Zeiträumen ein erster Betriebsmodus durchgeführt wird und in zweiten Zeiträumen, die sich mit den ersten Zeiträumen abwechseln, ein zweiter Betriebsmodus durchgeführt wird,
- in dem ersten Betriebsmodus ein erster Fluidstrom (A) auf einem ersten Temperaturniveau gebildet, in einem ersten Bereich (2) auf dem ersten Temperaturniveau in den Wärmetauscher (1) eingespeist, und in dem Wärmetauscher (1) teilweise oder vollständig abgekühlt wird,
- in dem ersten Betriebsmodus ein zweiter Fluidstrom (B) auf einem zweiten Temperaturniveau gebildet, in einem zweiten Bereich (3) auf dem zweiten Temperaturniveau in den Wärmetauscher (1) eingespeist, und in dem Wärmetauscher (1) teilweise oder vollständig erwärmt wird,
- in dem zweiten Betriebsmodus die Einspeisung des ersten Fluidstroms (A) und des zweiten Fluidstroms (B) in den Wärmetauscher (1) teilweise oder vollständig ausgesetzt wird, und
- entweder in dem zweiten Zeitraum oder in einem dritten Zeitraum, der zwischen zumindest einem der zweiten Zeiträume und dem darauf folgenden ersten Zeitraum liegt, dem ersten Bereich (2) Wärme zugeführt wird, die mittels einer außerhalb des Wärmetauschers (1) angeordneten Heizeinrichtung (7) bereitgestellt wird,
**dadurch gekennzeichnet, dass**
- die mittels der Heizeinrichtung (7) bereitgestellte Wärme über einen außerhalb des Wärmetauschers (1) befindlichen Gasraum (5), in dem der erste Bereich (2) angeordnet ist, zu dem ersten Bereich (2) übertragen wird.

2. Verfahren nach Anspruch 1, bei dem die Wärme über den Gasraum (3) zumindest teilweise konvektiv und/oder radiativ zu dem ersten Bereich (2) übertragen wird.

3. Verfahren nach Anspruch 1 oder 2, bei dem der zweite Bereich (3) ungekühlt betrieben wird, während dem ersten Bereich (2) in dem zweiten Zeitraum oder in dem dritten Zeitraum die Wärme zugeführt wird.

4. Verfahren nach Anspruch 3, bei dem der Wärmetauscher (1) im Rahmen eines Gasverflüssigungsverfahrens betrieben wird.

5. Verfahren nach Anspruch 4, bei dem das Gasverflüssigungsverfahren umfasst, den ersten Fluidstrom (A) zumindest teilweise zu verflüssigen und in unveränderter stofflicher Zusammensetzung als Verfahrensprodukt bereitzustellen.

6. Verfahren nach Anspruch 1 oder 2, bei dem der zweite Bereich (3) zumindest zeitweise gekühlt wird, während dem ersten Bereich (2) in dem zweiten Zeitraum oder in dem dritten Zeitraum die Wärme zugeführt wird.

7. Verfahren nach Anspruch 6, bei dem der Wärmetauscher (1) im Rahmen eines Gasgemischzerlegungsverfahrens betrieben wird.

8. Verfahren nach Anspruch 7, bei dem das Gasgemischzerlegungsverfahren mit einem integrierten Gasverflüssigungsverfahren durchgeführt wird.

9. Verfahren nach Anspruch 7 oder 8, bei dem ein in dem Gasgemischzerlegungsverfahren gebildete oder extern bereitgestellte tiefkalte Flüssigkeit verdampft und ein verdampfter Anteil der Flüssigkeit zumindest teilweise zum Kühlen des zweiten Bereichs (3) verwendet wird.

10. Anordnung (10) mit einem Wärmetauscher (1), wobei die Anordnung (10) Mittel aufweist, die dafür eingerichtet sind,
- in ersten Zeiträumen einen ersten Betriebsmodus durchzuführen und in zweiten Zeiträumen, die sich mit den ersten Zeiträumen abwechseln, einen zweiten Betriebsmodus durchzuführen,
- in dem ersten Betriebsmodus einen ersten Fluidstrom (A) auf einem ersten Temperaturniveau zu bilden, in einem ersten Bereich (2) auf dem ersten Temperaturniveau in den Wärmetauscher (1) einzuspeisen, und in dem Wärmetauscher (1) teilweise oder vollständig abzukühlen,
- in dem ersten Betriebsmodus einen zweiten Fluidstrom (B) auf einem zweiten Temperaturniveau zu bilden, in einem zweiten Bereich (3) auf dem zweiten Temperaturniveau in den Wärmetauscher (1) einzuspeisen, und in dem Wärmetauscher (1) teilweise oder vollständig zu erwärmen,
- in dem zweiten Betriebsmodus die Einspeisung des ersten Fluidstroms (A) und des zweiten Fluidstroms (B) in den Wärmetauscher (1) teilweise oder vollständig auszusetzen, und
- die Anordnung (10) eine außerhalb des Wärmetauschers (1) angeordnete Heizeinrichtung (7) umfasst, die dafür eingerichtet ist, entweder in dem zweiten Zeitraum oder in einem dritten Zeitraum, der zwischen zumindest einem der zweiten Zeiträume und dem darauf folgenden ersten Zeitraum liegt, dem ersten Bereich (2) Wärme zuzuführen, die mittels der Heizeinrichtung (7) bereitgestellt wird,
**dadurch gekennzeichnet, dass**
- die Anordnung (10) einen außerhalb des Wärmetauschers (1) angeordneten Gasraum (5) umfasst, in dem der erste Bereich (2) angeordnet ist, und die Anordnung (10) dafür eingerichtet ist, die mittels der Heizeinrichtung (7) bereitgestellte Wärme über den Gasraum (5) zu dem zweiten Bereich (2) zu übertragen.

11. Anordnung (10) nach Anspruch 10, die eine Coldbox (4) umfasst, in der der Wärmetauscher (1) angeordnet ist, wobei der Gasraum (5) durch einen an Isoliermaterial freien Bereich innerhalb der Coldbox (4) gebildet ist.

12. Anordnung (10) nach Anspruch 10 oder 11, bei der der erste Bereich des Wärmetauschers (1) ohne den ersten Bereich kontaktierende Aufhängungen in dem Gasraum (5) innerhalb der Coldbox (4) angeordnet ist.

13. Anordnung (10) nach einem der Ansprüche 10 bis 12, bei der die Heizeinrichtung (7) als Heizstrahler ausgebildet ist, oder bei dem die Heizeinrichtung (7) Heizbänder oder Heizwendel aufweist.

14. Anlage (100, 200), **gekennzeichnet durch** eine Anordnung nach einem der Ansprüche 10 bis 13, wobei die Anlage (100, 200) als Gasverflüssigungsanlage und/oder Gasgemischzerlegungsanlage ausgebildet ist.

15. Anlage (100) nach Anspruch 14, **dadurch gekennzeichnet, dass** sie zur Durchführung eines Verfahrens nach einem der Ansprüche 1 bis 8 eingerichtet ist.

## Claims

1. A method for operating a heat exchanger (1), in which
- a first operating mode is implemented in first time periods, and a second operating mode is implemented in second time periods alternating with the first time periods,
- in the first operating mode, a first fluid stream (A) is formed at a first temperature level, fed into the heat exchanger (1) in a first region (2) at the first temperature level, and partially or completely cooled in the heat exchanger (1),
- in the first operating mode, a second fluid stream (B) is formed at a second temperature level, fed into the heat exchanger (1) in a second region (3) at the second temperature level, and partially or completely heated in the heat exchanger (1),
- in the second operating mode, the feed of the first fluid stream (A) and the second fluid stream (B) into the heat exchanger (1) is partially or completely suspended, and
- heat is supplied to the first region (2) either in the second time period or in a third time period, which is between at least one of the second time periods and the subsequent first time period, said heat being provided by means of a heating device (7) arranged outside the heat exchanger (1),
**characterized in that**
- the heat provided by means of the heating device (7) is transmitted to the first region (2) via a gas compartment (5), located outside the heat exchanger (1), in which the first region (2) is arranged.

2. The method according to claim 1, in which the heat is transmitted at least partially via convection and/or radiation to the first region (2) via the gas compartment (3).

3. The method according to claim 1 or 2, in which the second region (3) is operated uncooled, whereas the heat is supplied to the first region (2) in the second time period or in the third time period.

4. The method according to claim 3, in which the heat exchanger (1) is operated within the scope of a gas liquefaction process.

5. The method according to claim 4, in which the gas liquefaction process comprises at least partially liquefying the first fluid stream (A) and providing it as a process product in an unchanged material composition.

6. The method according to claim 1 or 2, in which the second region (3) is cooled at least temporarily, whereas heat is supplied to the first region (2) in the second time period or in the third time period.

7. The method according to claim 6, in which the heat exchanger (1) is operated within the scope of a gas mixture decomposition process.

8. The method according to claim 7, in which the gas mixture decomposition process is implemented with an integrated gas liquefaction process.

9. The method according to claim 7 or 8, in which a cryogenic liquid formed or provided externally in the gas mixture decomposition process evaporates, and an evaporated fraction of the liquid is used at least in part for cooling of the second region (3).

10. An assembly (10) comprising a heat exchanger (1), wherein the assembly (10) comprises means that are configured
- to implement a first operating mode in first time periods, and to implement a second operating mode in second time periods alternating with the first time periods,
- in the first operating mode, to form a first fluid stream (A) at a first temperature level, to feed it into the heat exchanger (1) in a first region (2) at the first temperature level, and to cool it partially or completely in the heat exchanger (1),
- in the first operating mode, to form a second fluid stream (B) at a second temperature level, to feed it into the heat exchanger (1) in a second region (3) at the second temperature level, and to heat it partially or completely in the heat exchanger (1),
- in the second operating mode, to partially or completely suspend the feed of the first fluid stream (A) and the second fluid stream (B) into the heat exchanger (1), and
- the assembly (10) comprises a heating device (7), arranged outside of the heat exchanger (1), which is configured to supply heat to the first region (2) either in the second time period or in a third time period, which is between at least one of the second time periods and the subsequent first time period, said heat being provided by means of the heating device (7),
**characterized in that**
- the assembly (10) comprises a gas compartment (5), arranged outside of the heat exchanger (1), in which the first region (2) is arranged, and the assembly (10) is configured to transmit the heat provided by means of the heating device (7) to the second region (2) via the gas compartment (5).

11. The assembly (10) according to claim 10, which comprises a cold box (4) in which the heat exchanger (1) is arranged, wherein the gas compartment (5) is formed by a region free of insulating material within the cold box (4).

12. The assembly (10) according to claim 10 or 11, given which the first region of the heat exchanger (1) is arranged within the cold box (4) without suspension elements contacting the first region in the gas compartment (5).

13. The assembly (10) according to one of the claims 10 to 12, given which the heating device (7) is designed as a heating radiator, or given which the heating device (7) has heating bands or heating coils.

14. A system (100, 200), **characterized by** an assembly according to one of the claims 10 to 13, wherein the system (100, 200) is designed as a gas liquefaction plant and/or gas mixture decomposition plant.

15. The system (100) according to claim 14, **characterized in that** it is configured to implement a method according to one of the claims 1 to 8.

## Revendications

1. Procédé pour faire fonctionner un échangeur de chaleur (1), dans lequel
- dans des premiers intervalles de temps un premier mode de fonctionnement est exécuté et dans des deuxièmes intervalles de temps, qui s'alternent avec les premiers intervalles de temps, un deuxième mode de fonctionnement est exécuté,
- dans le premier mode de fonctionnement un premier flux de fluide (A) est formé à un premier niveau de température, introduit au premier niveau de température dans une première zone (2) dans l'échangeur de chaleur (1) et refroidi partiellement ou totalement dans l'échangeur de chaleur (1),
- dans le premier mode de fonctionnement un deuxième flux de fluide (B) est formé à un deuxième niveau de température, introduit au deuxième niveau de température dans une deuxième zone (3) dans l'échangeur de chaleur (1) et réchauffé partiellement ou totalement dans l'échangeur de chaleur (1),
- dans le deuxième mode de fonctionnement l'introduction du premier flux de fluide (A) et du deuxième flux de fluide (B) dans l'échangeur de chaleur (1) est suspendue partiellement ou totalement, et
- soit dans le deuxième intervalle de temps soit dans un troisième intervalle de temps, qui se situe entre au moins un des deuxièmes intervalles de temps et le premier intervalle de temps qui le suit, de la chaleur, qui est fournie au moyen d'un dispositif de chauffage (7) disposé à l'extérieur de l'échangeur de chaleur (1), est amenée dans la première zone (2),
**caractérisé en ce que**
- la chaleur fournie au moyen du dispositif de chauffage (7) est transmise, vers la première zone (2) à travers un espace de gaz (5) situé à l'extérieur de l'échangeur de chaleur (1), dans lequel la première zone (2) est disposée.

2. Procédé selon la revendication 1, dans lequel la chaleur est transmise à travers l'espace de gaz (3) de manière au moins partiellement convective et/ou radiative vers la première zone (2).

3. Procédé selon la revendication 1 ou 2, dans lequel la deuxième zone (3) fonctionne sans être refroidie, tandis que de la chaleur est amenée dans la première zone (2) dans le deuxième intervalle de temps ou dans le troisième intervalle de temps.

4. Procédé selon la revendication 3, dans lequel l'échangeur de chaleur (1) fonctionne dans le cadre d'un procédé de liquéfaction de gaz.

5. Procédé selon la revendication 4, dans lequel le procédé de liquéfaction de gaz comprend la liquéfaction au moins partielle du premier flux de fluide (A) et sa fourniture en composition matérielle inchangée comme produit du procédé.

6. Procédé selon la revendication 1 ou 2, dans lequel la deuxième zone (3) est au moins partiellement refroidie, tandis que de la chaleur est amenée dans la première zone (2) dans le deuxième intervalle de temps ou dans le troisième intervalle de temps.

7. Procédé selon la revendication 6, dans lequel l'échangeur de chaleur (1) fonctionne dans le cadre d'un procédé de séparation de mélanges gazeux.

8. Procédé selon la revendication 7, dans lequel le procédé de séparation de mélanges gazeux est exécuté avec un procédé de liquéfaction des gaz intégré.

9. Procédé selon la revendication 7 ou 8, dans lequel un liquide à basse température formé dans le procédé de séparation de mélanges gazeux ou fourni de l'extérieur s'évapore et une partie évaporée du liquide est utilisée au moins partiellement pour le refroidissement de la deuxième zone (3).

10. Ensemble (10) comprenant un échangeur de chaleur (1), l'ensemble (10) présentant des moyens qui sont conçus pour,
- exécuter, dans des premiers intervalles de temps, un premier mode de fonctionnement et exécuter, dans des deuxièmes intervalles de temps, qui s'alternent avec les premiers intervalles de temps, un deuxième mode de fonctionnement,
- former, dans le premier mode de fonctionnement, un premier flux de fluide (A) à un premier niveau de température, l'introduire au premier niveau de température dans une première zone (2) dans l'échangeur de chaleur (1) et le refroidir partiellement ou totalement dans l'échangeur de chaleur (1),
- former, dans le premier mode de fonctionnement, un deuxième flux de fluide (B) à un deuxième niveau de température, l'introduire au deuxième niveau de température dans une deuxième zone (3) dans l'échangeur de chaleur (1) et le réchauffer partiellement ou totalement dans l'échangeur de chaleur (1),
- suspendre partiellement ou totalement, dans le deuxième mode de fonctionnement, l'introduction du premier flux de fluide (A) et du deuxième flux de fluide (B) dans l'échangeur de chaleur (1) et
- l'ensemble (10) comprend un dispositif de chauffage (7) disposé à l'extérieur de l'échangeur de chaleur (1), qui est conçu pour, soit dans le deuxième intervalle de temps soit dans un troisième intervalle de temps, qui se situe entre au moins un des deuxièmes intervalles de temps et le premier intervalle de temps qui le suit, amener de la chaleur, qui est fournie au moyen du dispositif de chauffage (7), dans la première zone (2),
**caractérisé en ce que**
- l'ensemble (10) comprend un espace de gaz (5) disposé à l'extérieur de l'échangeur de chaleur (1), dans lequel la première zone (2) est disposée et l'ensemble (10) est conçu pour transmettre la chaleur qui est fournie au moyen du dispositif de chauffage (7) à travers l'espace de gaz (5) vers la deuxième zone (2).

11. Ensemble (10) selon la revendication 10, lequel comprend une boîte froide (4), dans laquelle l'échangeur de chaleur (1) est disposé, l'espace de gaz (5) étant formé par une zone libre de matériau isolant dans la boîte froide (4).

12. Ensemble (10) selon la revendication 10 ou 11, dans lequel la première zone de l'échangeur de chaleur (1) est disposée sans suspensions en contact avec la première zone dans l'espace de gaz (5) à l'intérieur de la boîte froide (4).

13. Ensemble (10) selon l'une quelconque des revendications 10 à 12, dans lequel le dispositif de chauffage (7) est réalisé sous la forme d'un chauffage rayonnant ou dans lequel le dispositif de chauffage (7) présente des rubans chauffants ou des filaments de chauffage.

14. Installation (100, 200), **caractérisée par** un ensemble selon l'une quelconque des revendications 10 à 13, l'installation (100, 200) étant réalisée sous la forme d'une installation de liquéfaction de gaz et/ou d'une installation de séparation de mélanges gazeux

15. Installation (100) selon la revendication 14, **caractérisée en ce qu'elle** est conçue pour l'exécution d'un procédé selon l'une quelconque des revendications 1 à 8.
